# EUROPEAN PATENT APPLICATION

(11) **EP 0 837 386 A1**
(43) Date of publication of application: **22.04.1998**
(21) Application number: 97308290.2
(22) Date of filing: 17.10.1997
(51) Int. Cl.: G06F 1/16

(54) **Docking station for portable computers**

(30) Priority: 17.10.1996 US 733356
(71) Applicant: Hewlett-Packard Company, Palo Alto, California 94304 (US)
(72) Inventor: Clark, Charles F., Roseville, California 95678 (US); McKinnon, Shawn Michael, Granite Bay, California 95746 (US)
(74) Representative: Jehan, Robert

(57) **Abstract**

A docking station 10 that positions the display of a portable computer in an ergonomically correct position with respect to a computer user by elevating the screen of the personal computer to a position above a work surface comparable to that provided by a conventional CRT-type monitor. Preferred docking stations may be configured to establish a docking link via infrared signals, or using the docking port connector found on most portable computers. When so configured, a mouse, keyboard, printer, network connection, and the like may be coupled to the docking station, and data flowing to and from these devices is routed through the docking link. Alternatively, the ergonomic docking station of the present invention may be used as a stand, and an external keyboard, mouse, and the like may be connected directly to the portable computer.

## Description

This invention relates to docking stations for portable computers. More specifically, this invention relates to a docking station for a portable computer that positions the display of the portable computer in a position comparable to that provided by typical desktop CRT-type computer displays.

Portable computers are designed to minimize size and weight. Portable computers include laptop computers, palm top computers and notebook computers.

A typical portable computer includes a hinged display screen attached to a base that includes a keyboard. Generally, a portable computer user will position the computer on a flat surface (such as a table or the user's lap) and open the computer and adjust the angle between the keyboard and the display so that the screen can be viewed comfortably. Generally the angle will be in the range of 90 to 150 degrees.

While portable computers are small and lightweight, these features are obtained at the expense of user ergonomics. A user of a portable computer must use a tiny keyboard and view the display at a bad angle that often causes light from above to be reflected from the display screen.

Many computer users have two computers, a desktop computer having a CRT display and positioned to have good ergonomics and a portable computer that is used when the user is away from the desktop computer. While this is an acceptable solution for many people, there are two major problems associated with this approach. First, the user must continuously synchronize data between the two computers, which involves swapping floppy diskettes or some other type of storage media, or coupling the computers together so that files may be transferred between the computers. Second, the user must buy two computers, and in some cases, two copies of the software used in each computer. At the current rate of advancement in the computer industry, a typical personal computer will be obsolete between two to four years after it is purchased. Therefore, maintaining two computer systems is prohibitively expensive for many people.

Because of the problems discussed above, docking stations have become a popular and convenient way to provide the ergonomics of a desktop computer using a portable computer. A typical docking station, such as the Hewlett-Packard 5500 Series Docking System, connects a laptop computer to a network, a large CRT monitor, a regular sized keyboard, a mouse, and other standard personal computer peripherals. In addition, various computer ports and indicator lights are provided at the docking station. The docking station also includes a power supply capable of powering the docking station electronics and the portable computer, and charging the portable computer battery.

While docking stations do an excellent job of "converting" a portable computer into a desktop computer having acceptable ergonomics, they have several drawbacks. First, the connections between the portable computer and the docking station are mechanical connector-based connections. Accordingly, if the pins of the connectors become deformed or dirty, the device connected to the docking station may not be able to communicate with the portable computer. Many docking stations, such as the Hewlett-Packard 5500, try to ensure a proper connection by using a motorized transport that positions the portable computer such that a connector on the back of the portable computer is inserted into a matched connector of the docking station. This type of docking is often referred to a motorized VCR type docking connection.

Another drawback of docking stations is that they typically only work with the portable computer system for which they were designed. For example, the Hewlett-Packard 5500 Series Docking System only works with the HP OmniBook 5500 portable computer. This limitation is imposed because of the proprietary nature of the docking connectors, the shape of the computer, and physical placement ofthe docking connectors.

In addition to the ability to connect to a docking station, many portable computers now include a bidirectional infrared port. Such infrared ports adhere to standards promulgated by the Infrared Data Association (IrDA). IrDA-1.0 defines an infrared communication standard capable of transmitting data at a rate of 115.2 kilobits per second, while IrDA-1.1 defines a standard capable of transmitting data at a rate of four megabits per second.

Infrared ports have been used to couple various types of peripherals to portable computer systems, as well as transfer files between a desktop computer and a portable computer. For example, Hewlett-Packard's J2964A NetBeamIR infrared interface allows a portable computer to connect to a local area network (LAN) simply by setting the portable computer in front of the NetBeamIR, and Hewlett-Packard's LaserJet 5P printer includes an infrared port that allows a portable computer to print to the printer after setting portable computer in front of the printer.

While infrared ports have been used to connect individual components to a portable computer, they have not been used to provide the functionality found in physical connector-based docking stations.

The present invention seeks to provide an improved docking station.

According to an aspect of the present invention, there is provided a computer docking station as specified in claim 1.

According to another aspect of the present invention, there is provided a computer docking station as specified in claim 4.

According to another aspect of the present invention, there is provided a method of docking a portable computer as specified in claim 17.

Preferred embodiments provide a universal ergonomic docking station that positions the display of a portable computer in an ergonomically correct position with respect to a computer user by elevating the screen of the personal computer to a position above a work surface comparable to that provided by a conventional CRT-type monitor.

In one embodiment ofthe invention, an infrared (IR) transceiver is attached to the docking station and communicates with an IR transceiver located on the back of a portable computer. This embodiment works with any portable computer having a standard IR port and executing software capable of facilitating communication with the IR port.

A second embodiment of the invention also positions the display of a portable computer in an ergonomically correct position with respect to a computer user. However, this embodiment uses pre-existing ports on the portable computer to provide connections to a keyboard, mouse, printer, network, and the like.

A third embodiment of the present invention also positions the display of a portable computer in an ergonomically correct position, but uses the docking port connector found on most portable computers. This embodiment requires that little, if any, interface software for the portable computer, and also works with portable computers that do not have an IR transceiver.

Embodiments of the present invention will now be described, by way of example only, with reference to the accompanying drawings, in which:
Figure 1 is a diagram showing a preferred docking station;
Figure 2 is a diagram ofa computer user seated upon a chair in an ergonomically correct position, and using portable computer that is docked with the docking station of Figure 1;
Figure 3 shows a low-cost embodiment of the docking station;
Figure 4 shows an embodiment of the docking station having a different support configuration;
Figure 5 shows the back of the docking station of Figure 4; and
Figure 6 shows the docking station of Figure 4 positioned upon a work surface, docked to a portable computer, and coupled to a separate keyboard and mouse.

There has been a desire for a completely wireless docking station that provides all the advantages of prior art physical connector-based docking stations without having to physically connect anything to a portable computer. To ensure the widest compatibility possible, it was also desired to use the infrared port that is commonly found on recent portable computers.

Unfortunately, one problem prevented the creation of a docking station as described above. Neither standard promulgated by the Infrared Data Association (IrDA), IrDA-1.0 nor IrDA-1.1, provides sufficient bandwidth to support the transmission of video data.

In prior art physical connector-based docking stations, the connector carries an analog signal between a digital-to-analog (A/D) converter that is part of the portable computer's video system and an analog CRT monitor. The IrDA standards are digital standards, and therefore cannot carry the analog signal. While it is theoretically possible to send a digital data refresh stream to an A/D converter in the docking station, such a stream would need to have a capacity capable of carrying tens of megabytes per second. However, IrDA-1.1 supports a transfer rate offour megabits per second (approximately 400 kilobytes per second), so such an option is not possible using an infrared port. It would also be theoretically possible to place an A/D converter and video memory in the docking station, which would eliminate the need for the wireless channel to support the refresh stream But this also proves to be unacceptably slow. Finally, it would be possible to send Windows display primitive commands over the wireless link, and have the commands rendered into video memory by a processor in the docking station. While this approach may provide acceptable performance, it is difficult to alter the operating system to support such a radically different architecture. Also, applications that attempted to write directly to video memory would not function properly. All ofthese options would introduce compatibility problems, and require expensive and complex hardware to be located in the docking station.

Preferred embodiments include a stand that supports the viewing screen of a portable computer in an ergonomically correct position, while providing a wireless port on the stand for providing the other connections that are typically provided by a docking station. All the other features of a docking station, such as a keyboard, mouse, modem, printer, network connection, serial and parallel ports, CD-ROM, and the like, can operate comfortably with the 4 megabit per second bandwidth offered by the IrDA-1.1 standard. In fact, all the features are functional with the slower 115 kilobit per second bandwidth offered the IrDA-1.0 standard. In fact, the slower standard provides perfectly acceptable performance when using the keyboard, mouse, and printer, though network access may be slow.

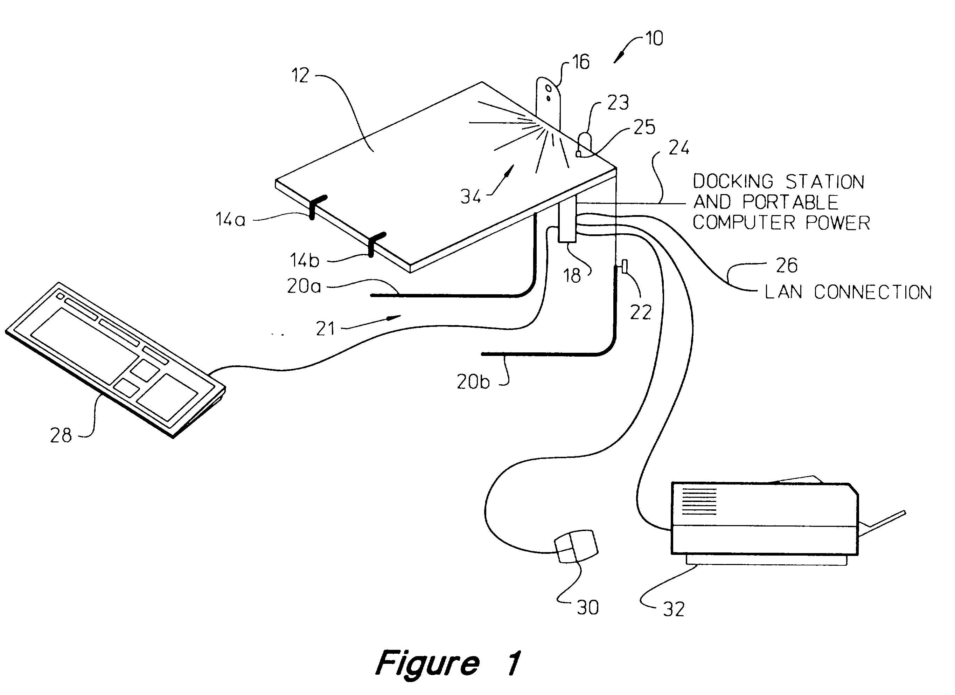

Figure 1 is a diagram showing a preferred docking station. Docking station 10 has a stand comprising angled, flat docking surface 12, adjustable support tabs 14a and 14b, and legs 20a and 20b. Legs 20a and 20b each have an adjustment knob (with knob 22 shown on leg 20b in Figure 1) to adjust the height of docking surface 12 with respect to the surface that supports legs 20a and 20b. Docking station 10 also includes IR transceiver 16, electronics/interface pod 18, and power cord 23 coupled to power connector 25.

Coupled to electronics/interface pod 18 are AC power connections for the docking station and portable computer (represented by line 24), a LAN connection (represented by line 26), keyboard 28, mouse 30, and printer 32. A power cord is also coupled to pod 18 to provide power to a portable computer via connector 25. Of course, the peripherals shown are merely representative, and any peripheral known in the art may be coupled to docking station 10. In addition, docking station 10 may be provided with a variety of ports as are known in the art, such as parallel ports, serial ports, SCSI ports, and the like.

To couple a portable computer to docking station 10, the portable computer is placed on docking surface 12 with the back of the computer positioned proximate IR transceiver 16, such that the portable computer's IR transceiver is within IR footprint 34 of IR transceiver 16. Adjustable support tabs 14a and 14b are then adjusted to support the portable computer and prevent the portable computer from sliding off docking surface 12, while allowing access to peripherals of the portable computer that may be accessed from the front, such as a floppy disk driver or a CD-ROM drive. Docking station 10 is constructed such that a keyboard storage space 21 exists under docking surface 12, thereby allowing keyboard 28 to be stored under surface 12 when docking station 10 is not in use.

The IR connection may be established manually by invoking the proper software, or automatically using plug 'n play drivers. For example, Hewlett-Packard's J2964A NetBeamIR infrared network interface, in cooperation with companion software running on the portable computer, is able to automatically establish a network connection when the IR transceivers of the NetBeamIR and the portable computer are within range of each other. Likewise, the present invention may be configured to "dock" with a portable computer when IR transceiver 16 is within range of the IR transceiver of a portable computer. The computer is "undocked" by simply removing the computer from the docking station. While the computer is docked, it may be powered by its own battery, connected to an AC source by the power supply provided with the portable computer, or connected to a power connection on electronics/interface pod 18.

U.S. Patent Application Serial No. 08/650,668, Randal Hergett and Gregory J. May, entitled "Docking Station With Wireless Interface" discloses a docking station that communicates with a portable computer via a wireless interface, such as an infrared interface or a radio frequency interface. The application is assigned to the same assignee as the present application and is incorporated by reference as if set forth herein.

Hergett et at disclose transmitting all I/O functions of a portable computer via a wireless link to a docking station, including video functions. Since the wireless link disclosed by Hergett et al. encompasses a radio frequency interface and any type of infrared interface (including proprietary interfaces), it can be assumed that a wireless interface exists that has sufficient bandwidth to handle video I/O. However, Hergett et at do not specifically address the bandwidth limitations ofthe IrDA-1.X standards, and the impact that these limitations have with respect to coupling the video signal to a video monitor via a wireless connection.

Hergett et al. disclose a docking station that has a wireless transceiver coupled to a protocol manager. The protocol manager is coupled to a port generator, which in turn generates a series of ports. A bus generator is also coupled to the protocol manager. The bus generator generates virtual bus slots so that standard PC cards (such as ISA, VLB, and PCI cards) can be plugged into the docking station and accessed via the portable computer. Accordingly, all I/O from the ports and virtual bus slots is packaged and unpackaged into a protocol by the protocol manager, and transmitted via the wireless transceiver.

Within the portable computer system, Hergett et al. disclose software that interfaces between the operating system (and application software) and the wireless transceiver of the portable computer system. The software includes a protocol manager, a virtual port/bus generator, and virtual port and bus modules that interface with the operating system and application software in a manner similar to physical ports and buses.

Although the docking station disclosed by Hergett et al. would have difficulty with a video signal transmitted via the IrDA-1.X standard, it is ideally suited for providing the remainder of I/O required by a docking station. Accordingly, it is ideally suited for use with the preferred embodiments described herein, with the portable computer executing the software disclosed by Hergett et al. and electronics/interface pod 18 configured in a manner similar to the docking station disclosed by Hergett et al. Of course, the software and electronics/interface pod 18 are not configured to provide a video interface, since the video screen is provided by proper positioning ofthe portable computer's video screen, in accordance with the present invention.

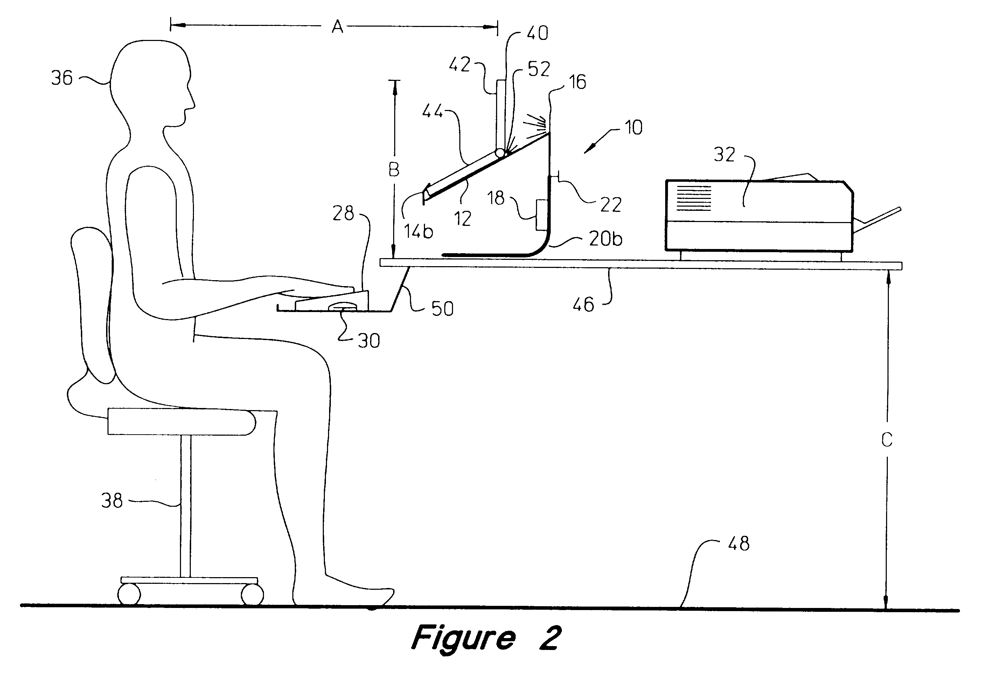

Figure 2 is a diagram of a computer user 36 seated upon chair 38 in an ergonomically correct position, and using portable computer 40, which is docked with a preferred docking station 10. Computer system 40 is positioned with the top of screen 42 slightly below the eye level of computer user 36. Computer system 40 is positioned on flat, angled docking surface 12 of docking station 10, and adjustable support tabs 14a and 14b (tab 14a is not visible in Figure 2 because it is behind tab 14b) prevent computer 40 from sliding off surface 12. Note that docking surface 12 can also be provided with a variety of non-slip surfaces, such as a textured rubber surface or Velcro, to prevent computer 40 from sliding off surface 12.

Angled, flat docking surface 12 provides docking station 10 with several features. First, it opens up the viewing area around screen 42. Second, it exposes the keyboard 44 of computer 40 so that user 36 may easily use keyboard 44 to perform such tasks as selecting startup option, launch docking software, or perform other tasks wherein keyboard 28 is unavailable. Third, any indicator lights that may be proximate keyboard 44 are visible to user 36. Finally, keyboard 44 is positioned with respect to screen 42 in a manner similar to that which a user would select if computer 40 were placed on a flat surface, thereby allowing computer 30 to be moved from a flat surface to docking station 10 with minimal adjustment. It has been found that an angle of 5 to 25° provides these benefits while also providing stable placement for computer 40.

When computer system 40 is docked with docking station 10, IR transceiver 16 of station 10 communicates with IR transceiver 52 of computer 40. As described above, electronics/interface pod 18 provides connections to a network and all docking station peripherals, such as keyboard 28, mouse 30, printer 32, and any other peripherals, ports, or I/O cards that may be attached to docking station 10.

In most work environments, the distance between floor 48 and work surface 46 (distance "C" in Figure 2) is approximately 30 inches. Many users prefer to have the keyboard placed lower then the work surface, and therefore use a recessed keyboard/mouse area, such as keyboard tray 50 in Figure 2. Keyboard tray 50 supports keyboard 28 and mouse 30, and it is typical for a computer user to position the keyboard anywhere between 0.5 and 5 inches lower than work surface 46.

In a publication entitled "Fitting the Job to the Worker: An Ergonomics Program Guideline," which is hereby incorporated by reference, the Department of Labor of the State of Washington recommends that the distance between a computer user's eyes and a viewing screen (distance "A" in Figure 2) be approximately 18-30 inches. As can be seen in Figure 2, ifportable computer 40 were used without docking station 10, with the hands of computer user 36 placed above keyboard 44 of computer 40, the horizontal distance "A" between the eyes of user 36 and viewing screen 40 would be significantly less than the recommended distance, most likely in the range of 12-15 inches, depending on the user.

In a book entitled "Bodyspace: Anthropometry, Ergonomics, and Design," which is hereby incorporated by reference, the author, Stephan Pheasant provides the following data about the vertical distance (in inches) between a work surface and the eyes of a computer user seated in an ergonomically correct position:

| | Male | | | Female | | |
|---|---|---|---|---|---|---|
| Percentiles | 5th | 50th | 95th | 5th | 50th | 95th |
| | 21.4 | 21.9 | 22.3 | 19.9 | 20.2 | 20.7 |

In addition, one ofthe inventors ofthe present invention, Charles F. Clark, performed a survey of 86 ergonomically trained workers at a Hewlett-Packard facility in Roseville, California. The survey found that the average distance between the work surface and the top of a computer screen (distance "B" in Figure 2) is 20.5 inches with a standard deviation of 1.63 inches. In view ofthe above, it is apparent that a typical worker seated in an ergonomically correct position places the screen of a computer just below eye level.

The top of a typical portable computer screen is about 7 to 10 inches above the base of the portable computer. Accordingly, the portion of docking surface 12 proximate view screen 42 of portable computer 40 must elevate the rear base area of portable computer 40 between 9 and 13 inches to achieve an ergonomically correct viewing height. This height is achieved by the dimensions of legs 20a and 20b in combination with the adjustment knobs, such as adjustment knob 22. Note that adjustment knob 22 allows the height computer system 40 to be varied to suit the individual user. However, also note that the standard deviation and percentiles associated with the data given above indicate that the range in which the top of the viewing screen is positioned is relatively narrow. Accordingly, another embodiment of docking station 10 does not have adjustment knobs, and is configured to position the top of the viewing screen of a typical portable computer at a height of approximately 20.5 inches above the work surface. This embodiment would be acceptable for a vast majority of computer users, while being less expensive to produce, more stable, and easier for a user to configure.

In testing the preferred embodiments with various portable computers and computer users ofvarying physical dimensions, it has been found that the present invention provides a computing experience remarkably similar to the experience of using a typical desktop computer system. Part of the success stems from the fact that portable computer screens continue to improve, and are progressively approaching the quality of standard desktop CRT monitors. For example, it is possible to get a portable computer having a flat panel color SVGA display greater than 12 inches (measured diagonally).

Also provided is another embodiment; a low-cost docking station. Most portable computers come with connections for a keyboard and a mouse. Accordingly, the low-cost embodiment of the present invention simply comprises the stand component of docking station 10 (as shown in Figures 1 and 2). With this embodiment, a computer user simply sets the laptop on the stand and plugs in the keyboard. If the user desires to use a graphical user environment, such as Microsoft's Windows® 95 operating system, the user can also plug in a pointing device, such as a mouse. With a portable computer supported on the stand component of docking station 10 shown in Figures 1 and 2, and a mouse and keyboard plugged into the portable computer, a computer user has all the ergonomic benefits of the embodiment shown in Figure 2. Of course, the computer user may also wish to attach a printer, modem, network connection, or any other type of peripheral supported by pre-existing ports on the portable computer.

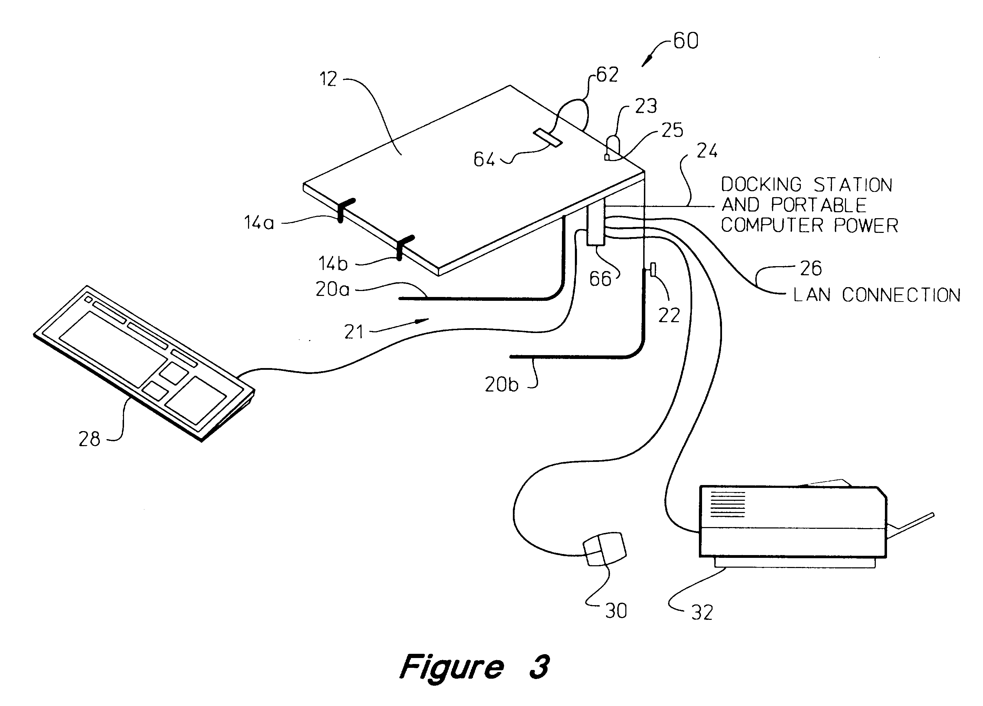

Figure 3 shows another embodiment of a low-cost docking station. Docking station 60 is similar to docking station 10 in Figure 1, except that IR transceiver 16 has been replaced by docking connector 64 (which in turn is coupled to interface cable 62) and electronics/interface pod 18 is replaced by interface pod 66.

Docking connector 64 connects with the docking connector found on most portable computers. Since many docking connectors are proprietary, connector 64 must be selected to match the docking connector ofthe personal computer to which connector 64 is to be connected. Alternatively, connector 64 can be an intermediate universal connector to which an adaptor is connected to provide the connection to a specific laptop.

Docking station 64 costs less to manufacture than docking station 10 of Figure 1 because interface pod 66 is much simpler than electronics/interface pod 18 of the docking station 10 shown in Figure 1. Most portable computers provide the various I/O signals at the docking connector, and all that interface pod 66 of docking station 60 preferably does route these signals to the proper pins of the connectors of the peripherals attached to pod 66. In contrast, electronics/interface pod 18 preferably provides an IR transceiver that is coupled to circuitry that implements a protocol manager, a port generator, and a bus generator. In addition, the portable computer preferably executes software to communicate with pod 18, as disclosed by Hergett et aL Minimal (if any) software is required to connect a portable computer to docking station 60, and it is likely that this software is available from the manufacturer.

Although Figure 1 depicts an IR link and Figure 3 depicts a physical docking connector link, the preferred embodiments can also be configured to operate with other types of interfaces, such as an interface that plugs into a PCMCIA slot, a Universal Serial Bus interface, a IEEE 1394 "Firewire" interface, a serial port, a parallel port, or any other type of interface known in the art of computing.

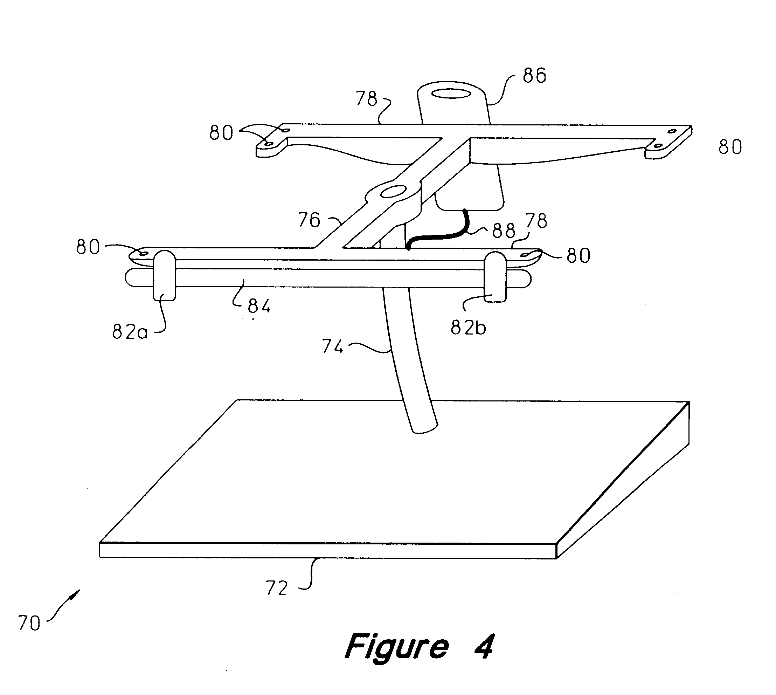

Figures 4 - 6 show another embodiment of the present invention. In Figure 4, docking station 70 has a base 72 that also provides a place for a keyboard to be stored when not being used. A single support arm 74 in combination with base 72 supports frame 76. Support arm 74 can have a fixed length, as shown in Figure 4, or can be adjustable.

Support frame 76 includes a docking surface 78 that supports a portable computer. Docking surface 78 includes non-slip pads 80 to help to keep a portable computer firmly seated upon docking surface 78. Adjustable support tabs 82a and 82b also help retain to a portable computer upon surface 78. Tabs 82a and 82b are movable along bar 84.

Docking station 70 also includes an IR transceiver 86 that is coupled to base 72 by cable 88. Although Figures 4 - 6 are depicted with respect to the wireless embodiment, the connector-based embodiment shown in Figure 3 can be easily adapted for use with the support structure of docking station 70. Likewise, the support structure of docking station 70 may be employed without any type of docking interface at all. A portable computer can be placed on docking surface 78 and a keyboard and mouse can be coupled to the appropriate connectors of the portable computer.

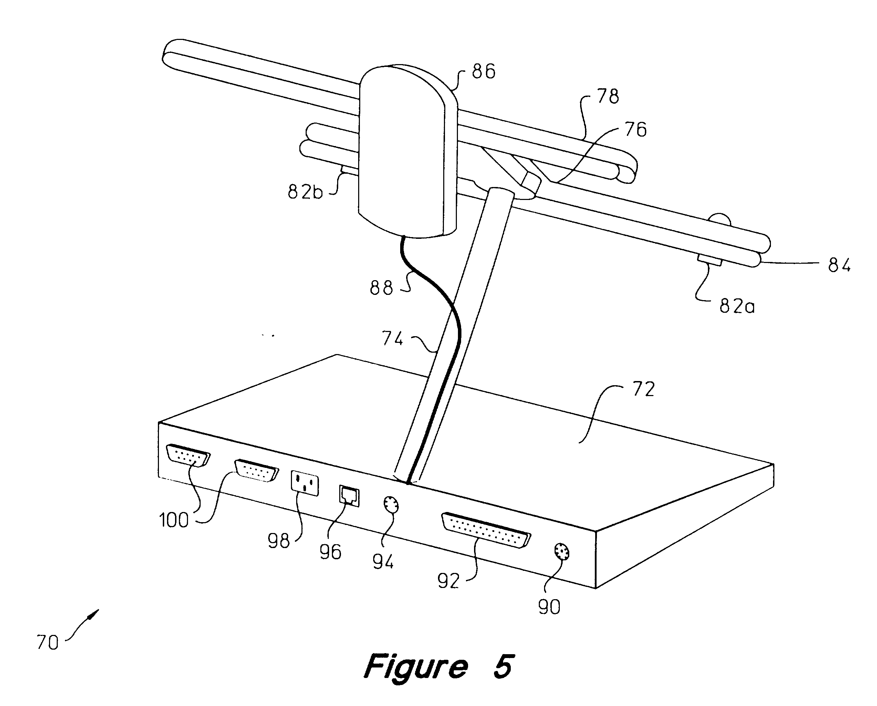

Figure 5 shows the back of docking station 70 of Figure 5. As opposed to the interface/electronics pod shown in Figure 1, the electronic and interface circuitry of docking station 70 is integrated into base 72. Accordingly, the back of base 72 includes a keyboard connector 90, a parallel printer port 92, a mouse port 94, a network port 96, a power connector 98, and serial ports 100. Of course, docking station 70 may also be provided with other computer ports, as are known in the art.

Although not shown in Figure 5, docking station 70 can also be configured with a portable computer power supply that is integrated into base 72, along with a cable that travels along support arm 74 and couples with the power connector of a portable computer. A similar configuration is shown in Figure 1. However, since one feature provided by the present invention is the ability to work with a wide variety of different portable computers, and the power requirements of portable computers vary, it may be more practical to simply use the power supply provided with a portable computer.

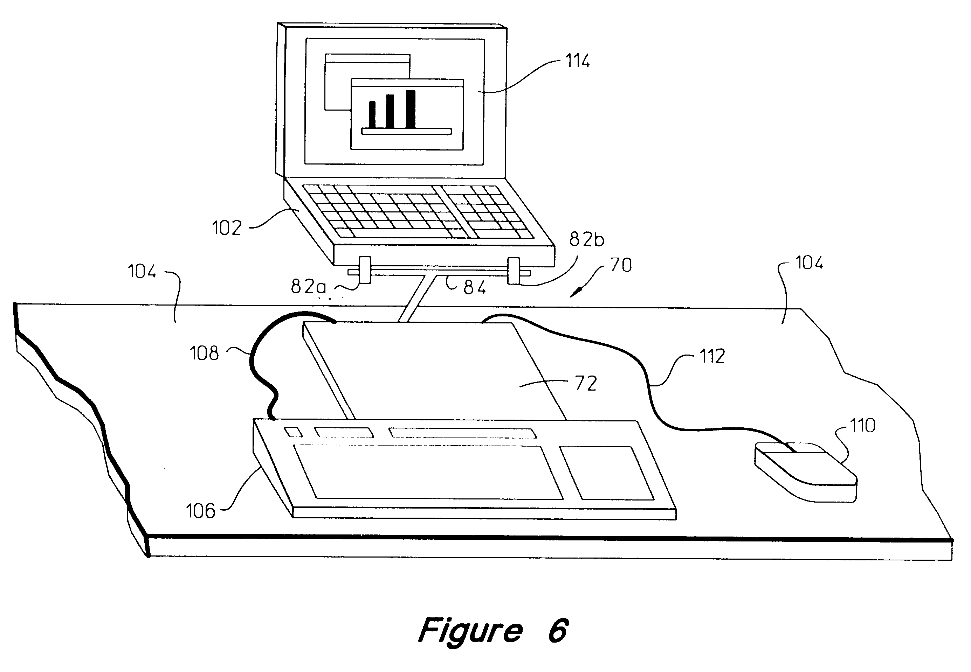

Figure 6 shows docking station 70 sitting on work surface 104 and docked with portable computer 102. Keyboard 106 is coupled to keyboard connector 90 (shown in Figure 5) via cord 108, and mouse 110 is couple to mouse connector 94 (also shown in Figure 5) via cord 112.

As can be seen in Figure 6, docking station 70 supports screen 114 ofportable computer 102 in an ergonomically correct position. Accordingly, a computer user does not have to peer downward when using computer 102, thereby reducing strain on the user's neck and eyes.

A preferred embodiment, therefore, provides a docking station that positions the display of a portable computer in an ergonomically correct position with respect to a computer user. In one embodiment ofthe invention, an IR transceiver attached to the docking station communicates with an IR transceiver located on the back of a portable computer. The portable computer includes software that routes the data associated with I/O ports ofthe portable computer to the docking station via an infrared link. The docking station receives the data and routes it based on the I/O port with which it is associated. This embodiment is universal and works with any portable computer having a standard IR port because all that is needed is the software required to communicate with the IR transceiver on the docking station.

The second embodiment disclosed also positions the display of a portable computer in an ergonomically correct position with respect to a computer user. However, this embodiment uses pre-existing ports on the portable computer to provide connections to a keyboard, mouse, printer, network, and the like. This embodiment is very low cost, since all that is required is the platform that position the portable computer in an ergonomically correct position.

The third embodiment positions the display of a portable computer in an ergonomically correct position, but uses the docking port connector found on most portable computers. This embodiment is relatively low in cost because minimal circuitry is required to couple the signals from the portable computer's docking port connector to the peripherals attached to the docking station. Also, this embodiment requires little, if any, interface software for the portable computer, and also works with portable computers that don't have an IR transceiver.

All preferred embodiments provide a computing experience remarkably similar to that obtained when using a conventional desktop computer. Since the quality of portable computer screens continues to increase, it is anticipated that the further embodiments will become even more beneficial in the future.

All preferred embodiments provide significant cost savings compared to prior art solutions. A user does not need to purchase a desktop computer. Nor does a user need to purchase a docking station that includes an expensive monitor.

Though the preferred embodiments have been described with respect to two different physical structures (as shown in Figures 1 and 4), a variety of physical structures can provide the same features. Accordingly, the preferred configurations are not limited to these structures, but encompasses any structure capable of supporting a personal computer above a work surface in an ergonomically correct position.

Although the present invention has been described with reference to preferred embodiments, workers skilled in the art will recognize that changes may be made in form and detail.

The disclosures in United States patent application no. 08/733,356, from which this application claims priority, and in the abstract accompanying this application, are incorporated herein by reference.

## Claims

1. A computer docking station (10) for use with a portable computer that includes a viewing screen, wherein the personal computer is connectable to a separate keyboard (28) that is positioned between the computer docking station (10) and a computer user, the computer docking station comprising:
a docking surface (12) that supports the viewing screen of the portable computer at a height such that a top of the viewing screen is positioned approximately at eye level or approximately below eye level of the computer user when the computer user is seated proximate a work surface and seated in an ergonomically correct position; and
at least one support member (20a, 20b; 74) to support the docking surface above the work surface.

2. A computer docking station according to claim 1, wherein each support member (20a, 20b; 74) has sufficient length to position a rear base area of a portable computer supported upon the docking surface between 9 and 13 inches above the work surface.

3. A computer docking station according to claim 1 or 2, and comprising:
an infrared transceiver (16); and
electronic and interface circuitry coupled to the infrared transceiver (16), the electronic and interface circuitry including a connection for a separate keyboard (28).

4. A computer docking station (10) for use with a portable computer that includes a viewing screen, the docking station comprising:
a docking surface (12; 78) that supports the portable computer, the docking surface having a region proximate the viewing screen; and
at least one support member (20a, 20b; 74) including a first portion that is adapted to rest upon a work surface and a second portion coupled to and supporting the docking surface, wherein a vertical distance between the first portion and the region of the docking surface proximate the viewing screen is between 9 and 13 inches.

5. A computer docking station according to claim 4 and comprising:
an infrared transceiver (16; 86); and
electronic and interface circuitry coupled to the infrared transceiver (16; 86), the electronic and interface circuitry including a keyboard port (90).

6. A computer docking station according to claim 3 or 5, wherein the electronic and interface circuitry also includes a printer port (92), a mouse port (94), and a network connector (96).

7. A docking station according to claim 3 or 5, and comprising:
a docking port connector (64) adapted to couple with a docking port connector of the portable computer;
an interface pod (18) that includes a keyboard connector; and
an interface cable coupled between the docking port connector and the interface pod.

8. A computer docking station according to claim 7, wherein the interface pod (18) also includes a printer port (92), a mouse port (94), and a network connector (96).

9. A computer docking station according to any preceding claim and comprising at least one support tab (14a, 14b; 82a, 82b) that retains the portable computer upon the docking surface.

10. A computer docking station according to any preceding claim, wherein each support tab (14a, 14b; 82a, 82b) is adjustable to vary a position ofthe support tab with respect to the portable computer.

11. A computer docking station according to any preceding claim, wherein the docking surface (12; 78) is angled to slope downward toward the user such that regions ofthe docking surface closest to the computer user are closer to the work surface than regions ofthe docking surface farthest from the computer user.

12. A computer docking station according to claim 11, wherein the docking surface (12; 78) is angled at a slope of between 5° and 25°.

13. A computer docking station according to any preceding claim, wherein the docking surface (12; 78) is provided with a non-slip surface (80).

14. A computer docking station according to any preceding claim, wherein each support member (74) comprises a leg (20a, 20b) coupled to the docking surface and arranged to be supported by the work surface.

15. A computer docking station according to claim 14, wherein each leg (20a, 20b) includes a height adjustment device (22) that varies a height ofthe docking surface with respect to the work surface.

16. A computer docking station for use with a portable computer that includes a viewing screen, the computer docking station comprising:
a docking surface (12; 78) that supports the portable computer, the docking surface (12; 78) including a region proximate the viewing screen of the portable computer when the portable computer is docked to the docking station;
a support structure including a first portion (20a, 20b; 72) that is adapted to rest upon a work surface and a second portion (76) coupled to and supporting the docking surface, wherein a vertical distance between the first portion and the region of the docking surface proximate the viewing screen is between 9 and 13 inches, and the support structure supports the docking surface at an angle between 5° and 25° with respect to the work surface;
at least one adjustable support tab (14a, 14b; 82a, 82b) that retains the portable computer upon the docking surface (12; 78); and
an infrared transceiver (16; 86) positioned proximate the docking surface to communicate with an infrared transceiver of a portable computer positioned upon the docking surface (12; 78);
electronic and interface circuitry coupled to the infrared receiver, the electronic and interface circuitry providing connections for a separate keyboard (28) and a mouse.

17. A method of docking a portable computer to a docking station while allowing a computer user to be seated in an ergonomically correct position and simultaneously use a viewing screen ofthe portable computer, the method comprising:
setting the portable computer on a docking surface (12; 78) of the docking station, wherein the docking surface is of sufficient height above a work surface to position a rear base area ofthe portable computer between 9 and 13 inches above the work surface; and
coupling a separate keyboard to the portable computer.

18. A method according to claim 17, wherein coupling a separate keyboard (28) to the portable computer comprises establishing an infrared link between an infrared receiver on the docking station and an infrared receiver on the portable computer.

19. A method according to claim 17, wherein coupling a separate keyboard (28) to the portable computer comprises coupling a docking port connector that is part of the docking station to a docking port connector of the portable computer.
